# EUROPEAN PATENT APPLICATION

(11) **EP 2 923 941 A1**
(43) Date of publication of application: **30.09.2015**
(21) Application number: 14161719.1
(22) Date of filing: 26.03.2014
(51) Int. Cl.: B63B 59/02, E02B 17/00, E02B 3/26

(54) **A maritime hydraulic impact-absorbing device**

(71) Applicant: World Marine Offshore A/S, 6700 Esbjerg (DK)
(72) Inventor: Ullmann, Jogvan, 6710 Esbjerg (DK)
(74) Representative: Hoffmann Dragsted A/S

(57) **Abstract**

The present invention relates to a maritime hydraulic impact-absorbing device for absorbing forces generated from an impact between a vessel having a speed and another structure which is either floating or fixed to a seabed. The impact-absorbing device comprises a base part having a first end and a second end and a connection point, the base part being adapted to be securely connected with the vessel or structure, and the base part having a longitudinal extension; at least one hydraulic cylinder having a first cylinder end and a second cylinder end, the first cylinder end being connected with the connection point of the base part, and the second cylinder end being connected with a movable impact face, whereby the movable impact face is adapted to be moved in a first, substantially horizontal direction when the second cylinder end of the hydraulic cylinder moves in the first horizontal direction, and is adapted to be moved in a second, substantially horizontal direction when the second cylinder end of the hydraulic cylinder moves in the second horizontal direction; and a hydraulic accumulator fluidly connected with the hydraulic cylinder. A first throttle valve is arranged between the hydraulic cylinder and the hydraulic accumulator, the first throttle valve being adapted to provide a pressure drop of a fluid flowing from the hydraulic cylinder to the hydraulic accumulator. The present invention furthermore relates to a vessel comprising a maritime hydraulic impact-absorbing device, a method of damping an impact between a moving vessel comprising a maritime hydraulic impact-absorbing device and another structure which is either floating or fixed to a seabed and an offshore personnel transfer system for transferring personnel between a vessel and an offshore wind turbine.

## Description

### Field of the invention

The present invention relates to a maritime hydraulic impact-absorbing device for absorbing forces generated from an impact between a vessel having a speed and another structure which is either floating or fixed to a seabed. The present invention furthermore relates to a vessel comprising a maritime hydraulic impact-absorbing device, a method of damping an impact between a moving vessel comprising a maritime hydraulic impact-absorbing device and another structure which is either floating or fixed to a seabed and an offshore personnel transfer system for transferring personnel between a vessel and an offshore wind turbine.

### Background art

There are many challenges to be overcome when bringing a vessel into contact with a structure offshore. These challenges are further increased by outer parameters such as wave heights, wave direction, current strength and direction, wind strength and direction, speed of vessel and visibility.

Furthermore, there is a risk of these parameters suddenly changing, which may increase the speed of the vessel, thereby causing the vessel to exert a higher load on the structure than intended, which may cause damage to the structure and/or vessel.

### Summary of the invention

It is an object of the present invention to wholly or partly overcome the above disadvantages and drawbacks of the prior art. More specifically, it is an object to provide an improved impact-absorbing device to minimise the risk of high loads exerted on a structure when a vessel is brought into contact with the structure.

Another object of the present invention is to provide an impact-absorbing device which is able to minimise the loads from the impact on a structure, even at higher speed of the vessel.

The above objects, together with numerous other objects, advantages and features, which will become evident from the below description, are accomplished by a solution in accordance with the present invention by a maritime hydraulic impact-absorbing device for absorbing forces generated from an impact between a vessel having a speed and another structure which is either floating or fixed to a seabed, the impact-absorbing device comprising:
- a base part having a first end and a second end and a connection point, the base part being adapted to be securely connected with the vessel or structure, and the base part having a longitudinal extension,
- at least one hydraulic cylinder having a first cylinder end and a second cylinder end, the first cylinder end being connected with the connection point of the base part, and the second cylinder end being connected with a movable impact face, whereby the movable impact face is adapted to be moved in a first, substantially horizontal direction when the second cylinder end of the hydraulic cylinder moves in the first horizontal direction, and is adapted to be moved in a second, substantially horizontal direction when the second cylinder end of the hydraulic cylinder moves in the second horizontal direction,
- a hydraulic accumulator fluidly connected with the hydraulic cylinder,
wherein a first throttle valve is arranged between the hydraulic cylinder and the hydraulic accumulator, the first throttle valve being adapted to provide a pressure drop of a fluid flowing from the hydraulic cylinder to the hydraulic accumulator.

Thus, by the impact-absorbing device according to the invention, it is possible for the vessel to have a higher speed and thereby manoeuvrability when approaching the other structure without the impact creating a higher pressure on the other structure. This is provided by the first throttle valve creating a pressure drop of the fluid in the entire stroke length of the hydraulic cylinder, and especially, the pressure drop is higher in the beginning of the impact as the compression of the hydraulic cylinder is faster.

In an embodiment, the first throttle valve may be adapted to provide a pressure drop of the fluid flowing from the hydraulic accumulator to the hydraulic cylinder.

In another embodiment, a second throttle valve may be arranged between the hydraulic cylinder and the hydraulic accumulator, the second throttle valve being adapted to provide a pressure drop of the fluid flowing from the hydraulic cylinder to the hydraulic accumulator.

The maritime hydraulic impact-absorbing device may further comprise at least one guide member having a first guide end and a second guide end, the second guide end being connected with the movable impact face and the first guide end being movable in relation to the base part.

In one embodiment, the base part may comprise at least a first transverse beam and a second transverse beam, the first transverse beam and the second transverse beam being substantially perpendicular to the longitudinal direction, the first transverse beam being arranged substantially at half a distance between the first end and the second end, and the second transverse beam being arranged at the second end.

Furthermore, the first transverse beam and the second transverse beam may each comprise a hole arranged opposite each other, and the guide member may be arranged in such a way that it extends through the holes.

In addition, the holes may each comprise a boss for supporting the guide member.

Also, the first transverse beam may comprise the connection point.

The maritime hydraulic impact-absorbing device may comprise two guide members arranged on each side of the hydraulic cylinder.

Moreover, the first and second transverse beams may each comprise two holes for the guide members to extend through, and the second transverse beam may comprise an additional hole for the hydraulic cylinder.

Additionally, the second guide end of the guide member may be movable in relation to the first guide end, and the first guide end is connected with the first end of the base part, and the second guide end is connected with the movable impact face.

Further, the guide member may comprise a first tube part having an outer diameter and a second tube part having an inner diameter, the inner diameter of the second tube part being smaller than the outer diameter of the first tube part, whereby the first tube part is displaceable in the first and second horizontal directions within the second tube part.

In an embodiment, the hydraulic accumulator may have a first part comprising a gas and a second part comprising a fluid, the second part being fluidly connected with the throttle valve and the hydraulic cylinder, and the first part and the second part being separated from each other by a piston or a diaphragm, the hydraulic accumulator having a volume and the hydraulic accumulator being set with a gas precharge pressure.

Furthermore, the gas precharge pressure of the hydraulic accumulator may be adjustable.

Also, the gas precharge pressure may be between 30 bar and 250 bar.

Moreover, the first throttle valve and/or the second throttle valve may be adjustable.

The maritime hydraulic impact-absorbing device may further comprise a plurality of hydraulic cylinders.

Also, the maritime hydraulic impact-absorbing device may further comprise a plurality of guide members.

In addition, the impact face may comprise a resilient material.

Furthermore, the resilient material may be high friction rubber.

Also, the impact face may have a middle section projecting from the rest of the impact face.

Additionally, the impact face may have two vertically extending grooves arranged with a predetermined distance between them.

Moreover, the hydraulic cylinder may be fluidly connected with the hydraulic accumulator by conduits.

In an embodiment, the hydraulic cylinder may have a stroke length of 0.5 meters to 3.0 meters depending on a displacement of the vessel.

Furthermore, the volume of the hydraulic accumulator may be between 0.02 m³ and 0.15 m³.

Also, a pressure transmitter may be arranged in connection with the hydraulic cylinder.

The maritime hydraulic impact-absorbing device may further comprise a plurality of hydraulic accumulators providing redundancy to the device.

Also, the device may further comprise a movable deck which is connected with the movable impact face.

One or more springs may be arranged between the first end and the movable impact face.

The present invention furthermore relates to a vessel comprising a maritime hydraulic impact-absorbing device as described above.

In an embodiment, the impact-absorbing device may be positioned at the bow of the vessel, at the stern of the vessel or at one of the sides of the vessel.

In another embodiment, the vessel may have a trimaran hull structure exploiting the advantages of a Small-waterplane-area twin hull vessel (SWATH).

Furthermore, the main hull of the trimaran hull may comprise a foil.

The present invention also relates to a harbour facility comprising a maritime impact-absorbing device as described above.

In addition, the present invention relates to a method of damping an impact between a moving vessel comprising a maritime hydraulic impact-absorbing device as described above and another structure which is either floating or fixed to a seabed, the method comprising the steps of:
- pre-charging the gas pressure in the hydraulic accumulator,
- moving the movable impact face in the first direction to a predetermined position,
- moving the vessel into contact with the structure, and
- damping the impact between the vessel and the structure by compressing the hydraulic cylinder, whereby the force compressing the hydraulic cylinder is absorbed by the pressure drop in the first throttle valve and the hydraulic accumulator.

Finally, the present invention relates to an offshore personnel transfer system for transferring personnel between a vessel and an offshore wind turbine, the system comprising:
- an offshore wind turbine having a boat-landing unit, and
- a vessel as described above comprising a maritime impact-absorbing device as described above,
wherein the impact-absorbing device is adapted to absorb the forces generated from the impact between the vessel having a speed and the boat-landing unit of the offshore wind turbine to minimise the impact of the vessel on the wind turbine.

### Brief description of the drawings

The invention and its many advantages will be described in more detail below with reference to the accompanying schematic drawings, which for the purpose of illustration show some non-limiting embodiments and in which
Fig. 1 shows a maritime impact-absorbing device according to the invention,
Fig. 2 shows a hydraulic diagram,
Fig. 3 shows an embodiment of the impact-absorbing device,
Figs. 4a-b show the movable impact face having guide members,
Fig. 5 shows a part of a vessel having the impact-absorbing device,
Fig. 6 shows an embodiment of a service vessel,
Fig. 7 shows the service vessel of Fig. 6 in a front view,
Fig. 8 shows another embodiment of a service vessel, and
Fig. 9 shows an offshore personnel transfer system.

All the figures are highly schematic and not necessarily to scale, and they show only those parts which are necessary in order to elucidate the invention, other parts being omitted or merely suggested.

### Detailed description of the invention

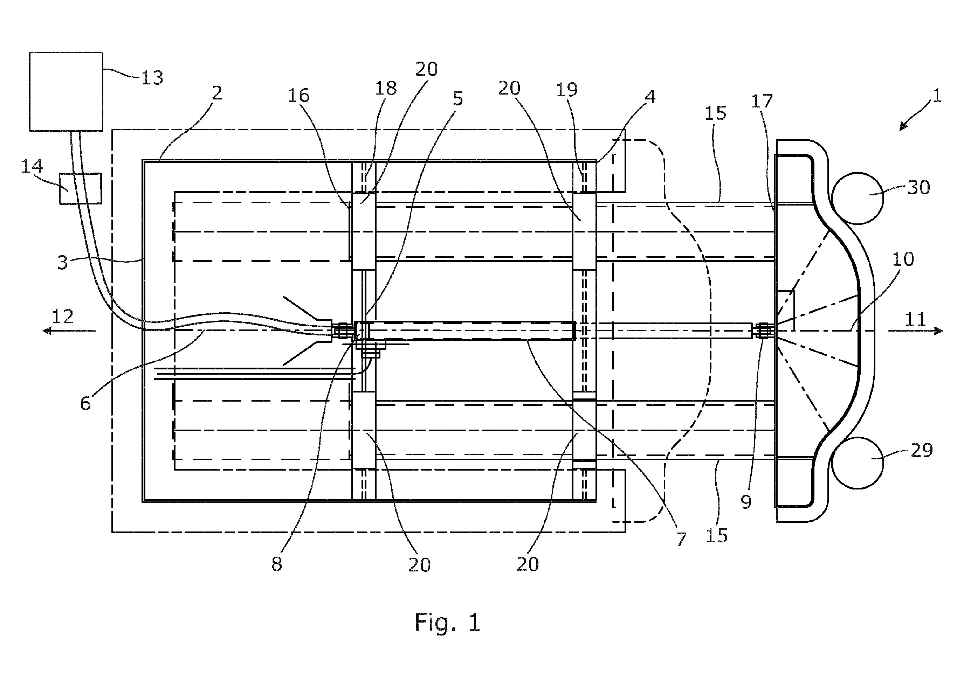

Fig. 1 shows a maritime hydraulic impact-absorbing device 1 according to the present invention for absorbing forces generated from an impact between a vessel (not shown) having a speed and another structure 29, 30 which is either floating or fixed to a seabed. The other structure may be another vessel, preferably having a larger displacement than the vessel having the impact-absorbing device, or it may be an offshore facility, such as an offshore wind turbine, an offshore platform, an offshore wave energy facility or a harbour facility. In Fig. 1, the other structure is two vertically extending tubes 29, 30 from a known boat-landing, for instance from an offshore wind turbine.

The impact-absorbing device 1 comprises a base part 2 having a first end 3 and a second end 4 and a connection point 5, and the base part 2 has a longitudinal extension 6. The base part 2 is adapted to be securely connected with the vessel or structure.

The impact-absorbing device 1 also comprises at least one hydraulic cylinder 7 having a first cylinder end 8 and a second cylinder end 9, the first cylinder end 8 being connected with the connection point 5 of the base part 2 and the second cylinder end 9 being connected with a movable impact face 10, whereby the movable impact face 10 is adapted to be moved in a first, substantially horizontal direction 11 when the second cylinder end 9 of the hydraulic cylinder 7 moves in the first horizontal direction 11, and is adapted to be moved in a second, substantially horizontal direction 12 when the second cylinder end 9 of the hydraulic cylinder 9 moves in the second horizontal direction 12. In Fig. 1, the impact face 10 is shown in a projected position in which it is moved in the first direction. The dotted lines indicate when the impact face 10 is in an retracted position.

Furthermore, a hydraulic accumulator 13 is fluidly connected with the hydraulic cylinder 7, and a first throttle valve 14 is arranged between the hydraulic cylinder 7 and the hydraulic accumulator 13, the first throttle valve 14 being adapted to provide a pressure drop of a fluid flowing from the hydraulic cylinder 7 to the hydraulic accumulator 13.

In Fig. 1, the impact-absorbing device 1 further comprises two guide members 15 each having a first guide end 16 and a second guide end 17, the second guide end 17 being connected with the movable impact face 10 and the first guide end 16 being movable in relation to the base part 2. The base part 2 also comprises at least a first transverse beam 18 and a second transverse beam 19 in this embodiment, the first transverse beam 18 and the second transverse beam 19 being substantially perpendicular to the longitudinal direction 6. The first transverse beam 18 is arranged at substantially half a distance between the first end 3 and the second end 4 of the base part 2, and the second transverse beam 19 is arranged at the second end 4.

Moreover, the first transverse beam 18 and the second transverse beam 19 each comprises a hole (not shown) arranged opposite each other, and the guide members 15 are arranged in such a way that they extend through the holes. Each hole comprises a boss 20 for supporting the guide members 15. The two guide members 15 are arranged on each side of the hydraulic cylinder 7.

In addition, as shown in Fig. 1, the first transverse beam 18 comprises the connection point 5.

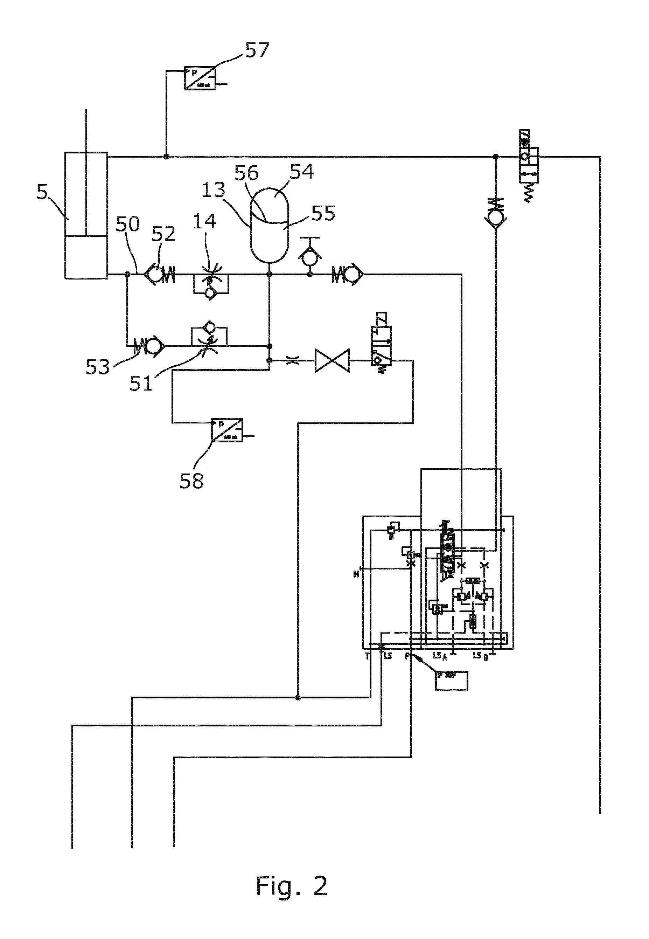

Fig. 2 shows a hydraulic diagram of the hydraulic cylinder 5 and hydraulic accumulator 13. The hydraulic cylinder 5 is fluidly connected with the hydraulic cylinder 13 via a conduit 50. According to the inventive idea, the first throttle valve 14 is arranged in connection with the conduit 50 and between the hydraulic cylinder 5 and the hydraulic accumulator 13 to cause a pressure drop of the fluid flowing from the hydraulic cylinder 5 to the hydraulic accumulator 13.

When the vessel is approaching the other structure, it has a certain kinetic energy which is determined by the displacement and speed of the vessel. This kinetic energy may be absorbed upon the impact with the other structure. According to the invention, this kinetic energy is absorbed by the impact-absorbing device 1. Furthermore, a doubling of the displacement of the vessel provides a doubling of the kinetic energy, however, a doubling of the speed of the vessel provides a four time doubling of the kinetic energy. Thus, the speed of the vessel is an important factor in terms of how large forces will occur during the impact and hence how large forces will be exerted on the other structure.

As the vessel comes into contact with the other structure, a force will be generated which will start to compress the hydraulic cylinder 5 of the impact-absorbing device 1. As shown in Fig. 2, the hydraulic cylinder 5 is fluidly connected with and working up against the hydraulic accumulator 13 and the first throttle valve 14 arranged in series. Hence, the total pressure in the hydraulic cylinder is equal to the pressure in the hydraulic accumulator and the pressure drop caused by the first throttle valve 14.

The pressure built up against the hydraulic cylinder 13 will start with the gas pressure which the hydraulic accumulator is precharged with and will then progressively increase as the hydraulic accumulator is compressed. The pressure drop caused by the first throttle valve 14 will be proportional with the square of the fluid flow. Accordingly, the pressure drop will be largest when the compression of the hydraulic cylinder is fastest, and thus, in the beginning when the compression of the hydraulic cylinder is substantially equal to the speed of the vessel, a huge pressure drop will be caused by the first throttle valve. When the speed of the vessel is zero, the pressure drop caused by the first throttle valve will be zero as well. Hence, the final pressure in the hydraulic accumulator will define the force between the bow and the vessel when the vessel has settled. When the vessel has settled, the vessel may be balanced up against the final pressure in the hydraulic accumulator by the propulsion means of the vessel, since the final pressure will be higher than the bollard pull of the vessel. Furthermore, the vessel will be forced outwards from the other structure if the propulsion means is not used for balancing the final pressure.

Thus, by the impact-absorbing device 1 according to the invention, it is possible for the vessel to have a higher speed and thereby manoeuvrability when approaching the other structure without the impact creating a higher pressure on the other structure. This is provided by the first throttle valve creating a pressure drop of the fluid in the entire stroke length of the hydraulic cylinder.

In the embodiment shown in Fig. 2, the device comprises a second throttle valve 51 adapted to provide a pressure drop of the fluid flowing from the hydraulic accumulator 13 to the hydraulic cylinder 5. Furthermore, a one-way valve 52 is arranged between the hydraulic cylinder 5 and the first throttle valve 14 for ensuring that the fluid will flow through the second throttle valve 51 on its way from the hydraulic accumulator 13 to the hydraulic cylinder 5. In the same manner, an additional one-way valve 53 is arranged between the hydraulic cylinder 5 and the second throttle valve 51 for ensuring that the fluid will flow through the first throttle valve 14 on its way from the hydraulic cylinder 5 to the hydraulic accumulator 13.

The hydraulic accumulator 13 has a first part 54 comprising a gas and a second part 55 comprising a fluid, the second part 55 being fluidly connected with the first throttle valve 14, and in this embodiment the second throttle valve 51 as well. Furthermore, the hydraulic cylinder 5, the first part 54 and the second part 55 are separated from each other by a piston or a diaphragm 56, the hydraulic accumulator having a volume and the hydraulic accumulator being set with a gas precharge pressure.

The first part may be connected with a pump (not shown) which is used for setting the gas precharge pressure. The gas precharge pressure of the hydraulic accumulator may advantageously be adjustable and may be set depending on the weather conditions. The gas precharge pressure may be between 30 bar and 250 bar depending on the size of the vessel and the volume of the hydraulic accumulator. The volume of the hydraulic accumulator may be between 0.02 m³ to 0.15 m³. Even though only one hydraulic accumulator is shown in the present embodiment, the impact-absorbing device 1 may comprise a plurality of hydraulic accumulators thereby providing redundancy to the device.

Furthermore, a pressure transmitter 57 is arranged in connection with the hydraulic cylinder 5 for measuring the size of the impact between the vessel and the other structure. The pressure transmitter 57 is connected with a control unit (not shown) which is adapted to store the measurements of the pressure transmitter 57 for documenting the pressure and thereby the impact force exerted on the other structure.

The impact-absorbing device 1 also comprises an additional pressure transmitter 58 arranged between the hydraulic accumulator 13 and the first and second throttle valves 14, 58 for measuring the hydraulic pressure in the fluid. The additional pressure transmitter 58 may also be connected with the control unit.

In addition, the hydraulic cylinder 5 may comprise a length sensor (not shown) adapted to indicate the stroke length of the hydraulic cylinder in the projected position.

In a vessel having a displacement of approximately 110 ton with an impact speed of around 1.25 m/sec, the impact-absorbing device may be designed with the following parameters:

| | |
|---|---|
| Start value for the total compression force on the impact-absorbing device | 177 kN |
| Desired compression length | 0.70 m |
| | |
| Hydraulic cylinder diameter | 110 mm |
| Cross-section area on the pressure side | 99503 mm² |
| Hydraulic cylinder pressure at start force | 186 bar |
| Stroke volume at max compression length | 6.65 dm³ |
| | |
| Hydraulic accumulator (basis volume) | 48.5 dm³ |
| Hydraulic accumulator - pressure not compressed | 43 bar |
| | |
| Hydraulic accumulator - start volume | 25 dm³ |
| Hydraulic accumulator - start force providing compression | 79 kN |
| Hydraulic accumulator - start pressure proving compression | 83 bar |
| | |
| Throttle valve - max pressure drop at start | 103 bar |

At the above-mentioned parameters, the 110 ton vessel will be able to approach the another structure at a speed of 1.25 m/sec, and the impact-absorbing device 1 according to the invention will ensure that the vessel does not exert an impact force on the other structure which exceeds a predetermined threshold.

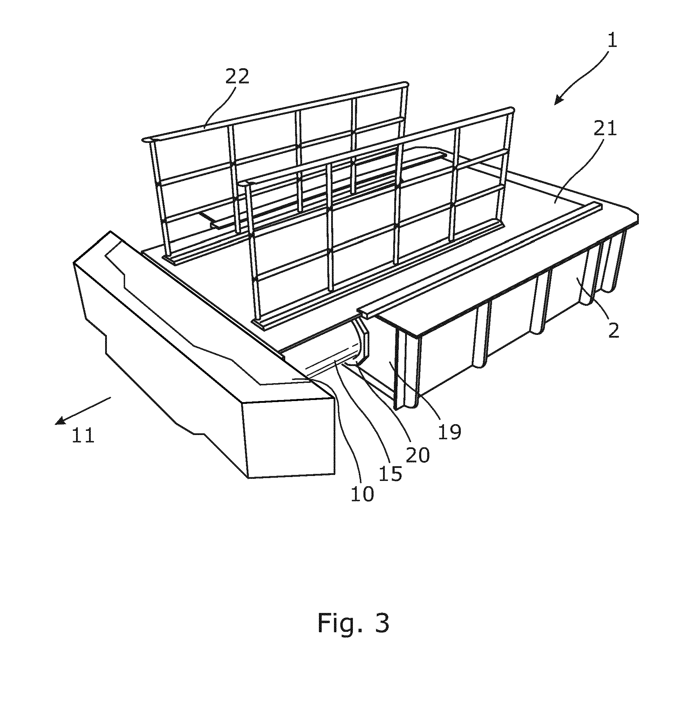

Fig. 3 shows a perspective view of the impact-absorbing device 1. In this embodiment of the impact-absorbing device 1, the base part 2 has the configuration of a box-shaped housing and may easily be incorporated on a vessel and securely fastened to the vessel, for instance by welding. The impact face 10 has been moved in the first direction 11 so that it is in the projected position, ready for impact with another structure. The impact face 10 comprises a resilient material on the outside face facing the other structure and is adapted to protect the impact face and function as a fender. The resilient material may be high friction rubber.

Furthermore, the impact face 10 is connected with the guide members 15, and the guide members 15 extend through the second transverse beam 19 and are supported by the boss 20. The second transverse beam 19 closes off the connection to the inside of the base part 2. A movable plate 21 is connected with the movable impact face 10. The plate 21 is moveable together with the moveable impact face in the first and second directions and is preferably moveable above a deck of the vessel, enabling service crew to move from the vessel to the other structure. Furthermore, railings 22 may be arranged on each side of the plate 21 for protecting the service crew.

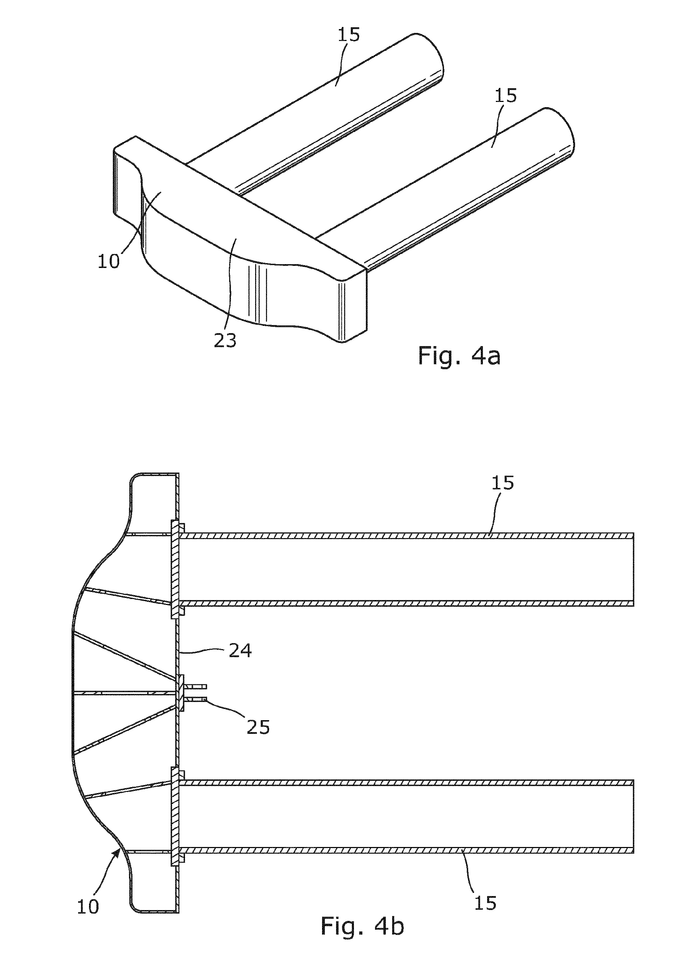

In Figs. 4a-b, the impact face 10 having two guide members 15 is shown in a perspective view and a cross-sectional view, respectively. In this embodiment, the impact face 10 has a middle section 23 projecting from the rest of the impact face, thereby assisting in guiding the impact face into contact with e.g. a well-known boat-landing on an offshore wind turbine. In Fig. 4b, the impact face 10 and guide members 15 are shown in a cross-sectional view. The guide members 15 are in this embodiment hollow tubes being connected with the impact face 10. At an inside face 24 of the impact face 10, a connection part 25 is arranged, the connection part 25 being adapted to connect the impact face 10 with the second cylinder end of the hydraulic cylinder. Preferably, the second cylinder end is releasable connected to the connection part 25.

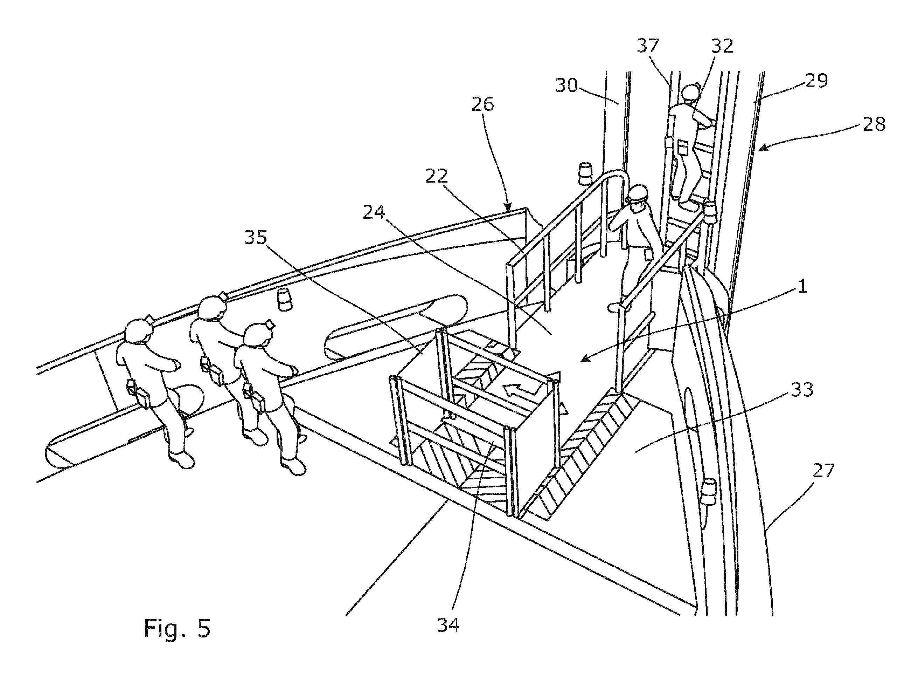

Fig. 5 partly shows a bow 26 of a vessel 27 and the impact-absorbing device 1 incorporated therein. The vessel 27 has in Fig. 5 been brought into contact with a known boat-landing 28 comprising two vertically extending tubes 29, 30 arranged with a predetermined mutual distance and a ladder 31 arranged at a distance from the two tubes. The service crew 32 using the ladder is thereby protected from the moving vessel by the two tubes when the vessel is moving up and down along the tubes due to weather conditions. In fact, this design of the boat-landing is well-known and recognised as the most commonly used boat-landing design for offshore wind turbines world-wide, and has been invented by Mr. Jogvan Ullmann who also is the inventor on the present invention.

Furthermore, the moving plate 21 having railings 22 is arranged above the deck 33 of the vessel and may be used by the service crew for getting access to the boat-landing of the other structure, as seen in Fig. 5. In this embodiment, the railings 22 end a distance from the end 34 of the plate 21, thereby enabling the service crew to step onto the plate 21 from the side and transverse to the moving direction of the plate 21 when it moves along with the impact face. Moreover, a safety assembly 35 is arranged on the deck 33 for protecting the persons on the deck from the moving end 34 of the plate 21. Signs and guidance may also be arranged on the deck 33 for assisting the persons in safe use of the plate 21.

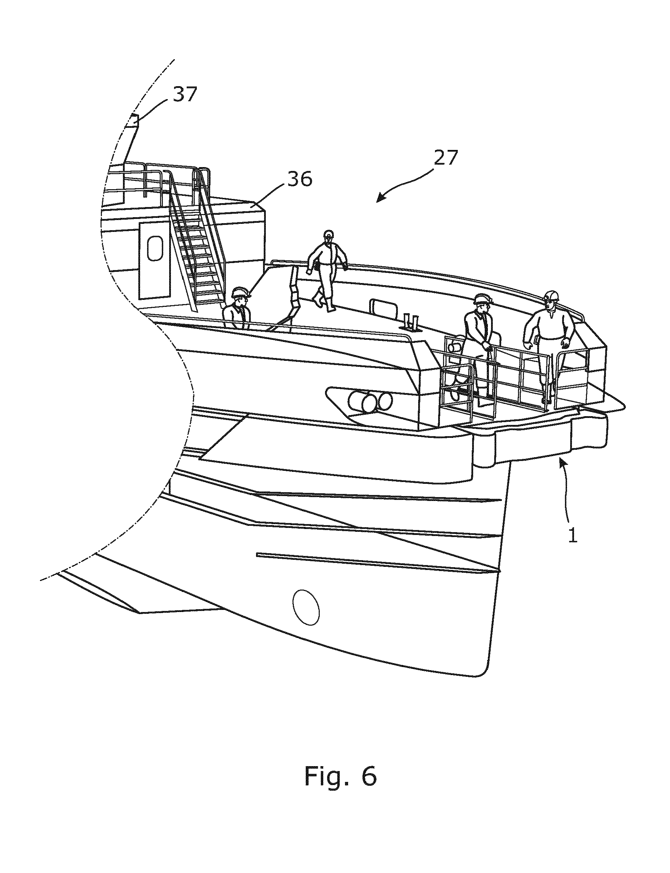

Fig. 6 partly shows a service vessel 27 for offshore wind turbines. At its bow, the vessel 27 comprises an impact-absorbing device 1 as described above. The vessel 27 has a trimaran hull structure and is adapted to exploit the advantages of a Small-waterplane-area twin hull vessel (SWATH). By using the advantages of SWATH, the hull cross section area at the sea surface is minimised. Minimising the vessel's volume near the surface area of the sea, where wave energy is located, maximises a vessel's stability, even in high seas and at high speeds. The bulk of the displacement necessary to keep the vessel afloat is located beneath the waves, where it is less affected by wave action. Wave excitation drops exponentially as depth increases. Furthermore, the accommodation 36 and wheelhouse 37 are arranged aft on the vessel for reducing the hiv and pitch movements, thereby providing improved sea comfort for both passenger and crew.

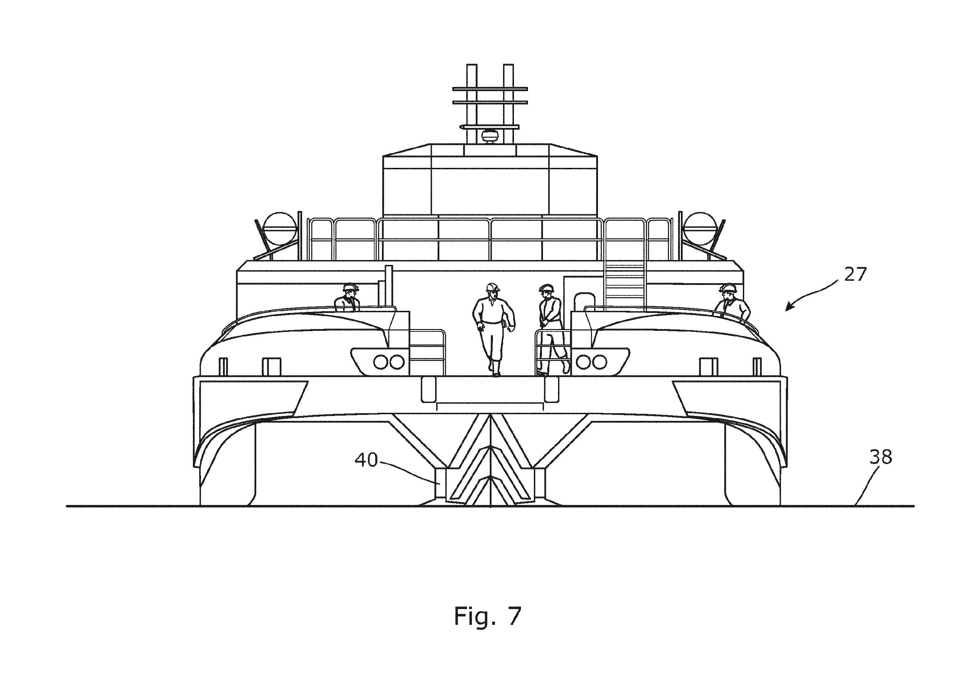

Fig. 7 shows the vessel 27 in SWATH-mode by the water-line 38. The not shown non SWATH-mode is used when the vessel 27 is sailing from harbour to the offshore wind turbines and back. Here, the trimaran hull structure provides improved sea comfort to the crew and passengers, even at high speed, and provides less fatigue and slamming to the vessel when sailing in waves. The main hull 40 of the trimaran hull structure comprises a foil (not shown) for yet improving the sea comfort and movement of the vessel. Moreover, at the offshore wind turbine, the vessel is ballasted down, thereby minimising the roll, pitch and hiv movements of the vessel.

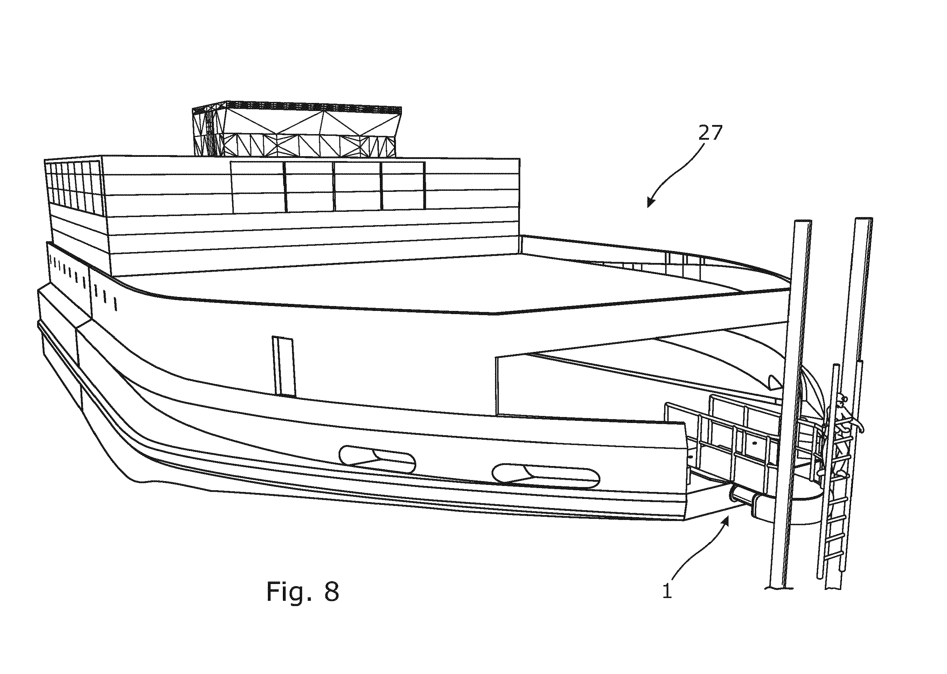

In Fig. 8, another service vessel 27 is shown. This vessel 27 is larger than that shown in Fig. 7, but also comprises the impact-absorbing device 1.

The present invention also relates to a method of damping an impact between a moving vessel comprising a maritime hydraulic impact-absorbing device as described above and another structure which is either floating or fixed to a seabed, the method comprising the steps of:
- pre-charging the gas pressure in the hydraulic accumulator,
- moving the movable impact face in the first direction to a predetermined position,
- moving the vessel into contact with the structure, and
- damping the impact between the vessel and the structure by compressing the hydraulic cylinder, whereby the force compressing the hydraulic cylinder is absorbed by the pressure drop in the first throttle valve and the hydraulic accumulator.

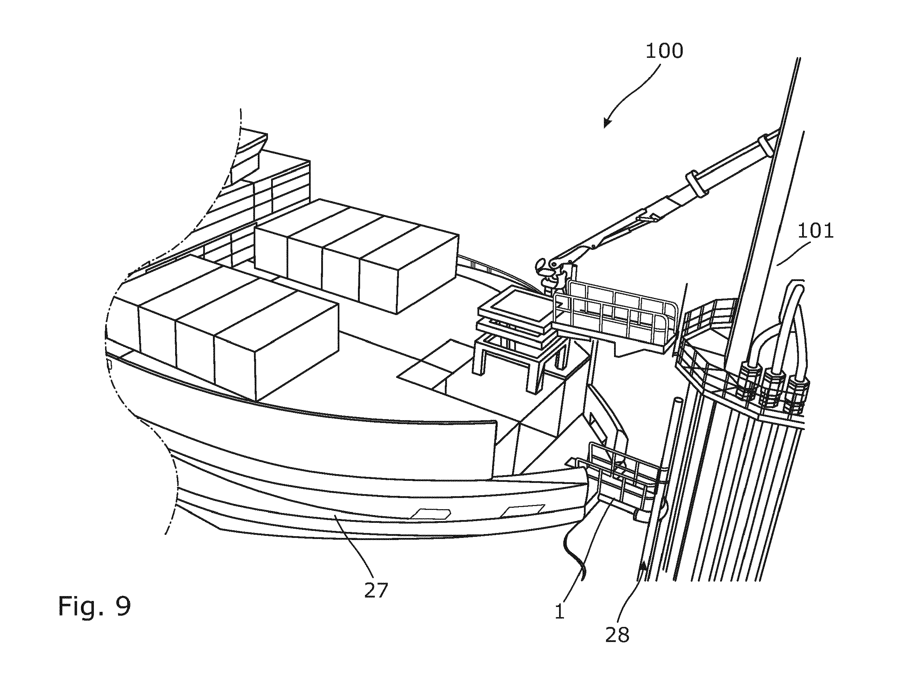

In Fig. 9, an offshore personnel transfer system 100 for transferring personnel between a vessel 27 and an offshore wind turbine 101, the system 100 comprising:
- an offshore wind turbine 101 having a boat-landing unit 28, and
- a vessel 27 comprising a maritime impact-absorbing device 1,
wherein the impact-absorbing device 1 is adapted to absorb the forces generated from the impact between the vessel 27 having a speed and the boat-landing unit 28 of the offshore wind turbine 101 to minimise the impact of the vessel on the wind turbine to below a predetermined threshold.

Although the invention has been described in the above in connection with preferred embodiments of the invention, it will be evident for a person skilled in the art that several modifications are conceivable without departing from the invention as defined by the following claims.

## Claims

1. A maritime hydraulic impact-absorbing device (1) for absorbing forces generated from an impact between a vessel (27) having a speed and another structure which is either floating or fixed to a seabed, the impact-absorbing device comprising:
- a base part (2) having a first end (3) and a second end (4) and a connection point (5), the base part (2) being adapted to be securely connected with the vessel or structure, and the base part having a longitudinal extension (6),
- at least one hydraulic cylinder (7) having a first cylinder end (8) and a second cylinder end (9), the first cylinder end (8) being connected with the connection point (5) of the base part (2), and the second cylinder end (9) being connected with a movable impact face (10), whereby the movable impact face (10) is adapted to be moved in a first, substantially horizontal direction (11) when the second cylinder end (9) of the hydraulic cylinder (7) moves in the first horizontal direction, and is adapted to be moved in a second, substantially horizontal direction (12) when the second cylinder end of the hydraulic cylinder moves in the second horizontal direction,
- a hydraulic accumulator (13) fluidly connected with the hydraulic cylinder (7), wherein a first throttle valve (14) is arranged between the hydraulic cylinder (7) and the hydraulic accumulator (13), the first throttle valve (14) being adapted to provide a pressure drop of a fluid flowing from the hydraulic cylinder (7) to the hydraulic accumulator (13).

2. A maritime hydraulic impact-absorbing device (1) according to claim 1, wherein a second throttle valve (51) is arranged between the hydraulic cylinder (7) and the hydraulic accumulator (13), the second throttle valve (51) being adapted to provide a pressure drop of the fluid flowing from the hydraulic accumulator (13) to the hydraulic cylinder (7).

3. A maritime hydraulic impact-absorbing device (1) according to any of the preceding claims, further comprising at least one guide member (15) having a first guide end (16) and a second guide end (17), the second guide end (17) being connected with the movable impact face (10) and the first guide end (16) being movable in relation to the base part (2).

4. A maritime hydraulic impact-absorbing device (1) according to claim 3 comprising two guide members (15) arranged on each side of the hydraulic cylinder (7).

5. A maritime hydraulic impact-absorbing device (1) according to any of the preceding claims, wherein the hydraulic accumulator (13) has a first part (54) comprising a gas and a second part (55) comprising a fluid, the second part being fluidly connected with the throttle valve and the hydraulic cylinder, and the first part and the second part being separated from each other by a piston or a diaphragm (56), the hydraulic accumulator having a volume and the hydraulic accumulator being set with a gas precharge pressure.

6. A maritime hydraulic impact-absorbing device (1) according to claim 5, wherein the gas precharge pressure of the hydraulic accumulator (13) is adjustable.

7. A maritime hydraulic impact-absorbing device (1) according to claim 5 or 6, wherein the gas precharge pressure is between 30 bar and 250 bar.

8. A maritime hydraulic impact-absorbing device (1) according to any of the preceding claims, wherein the first throttle valve (14) and/or second throttle valve (51) is/are adjustable.

9. A maritime hydraulic impact-absorbing device (1) according to any of the preceding claims, wherein the hydraulic cylinder (7) has a stroke length of 0.5 meters to 3.0 meters depending on a displacement of the vessel.

10. A maritime hydraulic impact-absorbing device (1) according to claim 5, wherein the volume of the hydraulic accumulator (13) is between 0.02 m³ and 0.15 m³.

11. A maritime hydraulic impact-absorbing device (1) according to any of the preceding claims, wherein a pressure transmitter (57) is arranged in connection with the hydraulic cylinder (7).

12. A vessel (27) comprising a maritime hydraulic impact-absorbing device (1) according to any of the preceding claims.

13. A vessel (27) according to claim 12 having a trimaran hull structure exploiting the advantages of a Small-waterplane-area twin hull vessel (SWATH).

14. A method of damping an impact between a moving vessel (27) comprising a maritime hydraulic impact-absorbing device (1) according to any of the claims 1-11 and another structure which is either floating or fixed to a seabed, the method comprising the steps of:
- pre-charging the gas pressure in the hydraulic accumulator (13),
- moving the movable impact face (10) in the first direction to a predetermined position,
- moving the vessel (27) into contact with the structure, and
- damping the impact between the vessel (27) and the structure by compressing the hydraulic cylinder (7), whereby the force compressing the hydraulic cylinder (7) is absorbed by the pressure drop in the first throttle valve (14) and the hydraulic accumulator (13).

15. An offshore personnel transfer system (100) for transferring personnel between a vessel (27) and an offshore wind turbine (101), the system comprising:
- an offshore wind turbine (101) having a boat-landing unit (28), and
- a vessel (27) according to any of the claims 12-13 comprising a maritime impact-absorbing device (1) according to any of the claims 1-11,
wherein the impact-absorbing device (1) is adapted to absorb the forces generated from the impact between the vessel (27) having a speed and the boat-landing unit (28) of the offshore wind turbine (101) to minimise the impact of the vessel (27) on the wind turbine (101).
